## Europäisches Patentamt

## European Patent Office

## Office européen des brevets

(11) Veröffentlichungsnummer: **0 291 815 B1**

(12) **EUROPÄISCHE PATENTSCHRIFT**

(45) Veröffentlichungstag der Patentschrift: **30.09.92**

(21) Anmeldenummer: **88107443.9**

(22) Anmeldetag: **09.05.88**

(51) Int. Cl.⁵: **H04Q 3/00,** H04M 3/36

(54) Verfahren zur Einstellung einer Durchlassquote für in einer Fernmeldeanlage eintreffende Schaltereignisse.

(30) Priorität: **22.05.87 DE 3717382**

(43) Veröffentlichungstag der Anmeldung:
**23.11.88 Patentblatt 88/47**

(45) Bekanntmachung des Hinweises auf die
Patenterteilung:
**30.09.92 Patentblatt 92/40**

(84) Benannte Vertragsstaaten:
**AT BE CH DE FR GB IT LI NL SE**

(56) Entgegenhaltungen:
**US-A- 3 536 842**

**PATENT ABSTRACTS OF JAPAN, Band 7, Nr.
204 (E-197)[1349], 9. September 1983, Seite
94 E 197 & JP-A-58 101 550**

**IEEE, THE 14TH CONVENTION OF ELECTRI-
CAL & ELECTRONICS ENGINEERS IN ISRAEL,
26.-28. März 1985, Tel Aviv, Seiten 1-3, IEEE,
New York, US; B. AKSELROD et al.:
"Applications of learning automata to routing in a multi-priority telephone network"**

(73) Patentinhaber: **SIEMENS AKTIENGESELL-
SCHAFT
Wittelsbacherplatz 2
W-8000 München 2(DE)**

(72) Erfinder: **Daisenberger, Georg, Dipl.-Ing.
Kärtnerplatz 3
W-8000 München 21(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Einstellung einer Durchlaßquote gemäß dem Oberbegriff des Patentanspruchs 1.

Eine Anordnung zur Durchführung eines Verfahrens dieser Art ist bereits in der europäischen Patentanmeldung 0 134 010 (DE-OS 3 328 572 = VPA 83 P 1558 DE) beschrieben. Drosselungseinrichtungen der bekannten Art dienen dazu, Überbelastungen von Schalteinrichtungen, die Schaltereignisse, zum Beispiel Verbindungsherstellungsaufträge oder in diesen enthaltene einzelne Schaltkennzeichen in Fernsprechvermittlungsanlagen, zu verarbeiten haben, vorausschauend so zu vermeiden, daß der informationsverarbeitungstechnische Aufwand für eine entsprechende Verarbeitung solcher Schaltereignisse nicht nur in allgemeinem Sinne an die jeweils gegebene Verarbeitungskapazität angepaßt wird, sondern auch dahingehend begrenzt wird, daß er auch nicht unnützerweise geleistet wird, das heißt, daß er nicht zunächst geleistet wird und wegen eines anderweitigen späteren Resultates, zum Beispiel eines negativen Resultates, verworfen werden muß. Hierzu beschreibt bereits die obige Patentanmeldung Maßnahmen zur Abweisung eines rein statistisch ausgewählten Anteils aus der Gesamtheit der eintreffenden Informationsverarbeitungsaufträge in der vermittlungstechnischen Peripherie, also gleichsam im Vorfeld, wenn deren Weiterleitung von hier an das betreffende zentrale Informationsverarbeitungs-Schaltwerk in ihrer Gesamtheit doch nur zu einer Überbelastung des letzteren führen würde. Um diese Maßnahmen möglichst gut vorausschauend treffen zu können, ist im bekannten Falle unter anderem vorgesehen, die als Schaltkennzeichen auftretenden Informationsverarbeitungsaufträge, die jeweils zu ein und demselben Verbindungsherstellungsauftrag gehören, zu unterscheiden in ein Initialschaltkennzeichen einerseits und Nachfolgeschaltkennzeichen andererseits, sowie die ersteren zur Ermittlung einer jeweils bevorstehenden, durch die Nachfolgeschaltkennzeichen bedingten Verkehrsbelastung zu erfassen und auszuwerten. Um die genannten Maßnahmen der Abweisung zwecks Drosselung der Verkehrsbelastung möglichst präzise treffen zu können, ist im bekannten Falle ferner ein zweistufiges Meßverfahren vorgesehen, wodurch in erster Stufe eine Belastbarkeitsmessung durchgeführt wird, auf deren Basis in zweiter Stufe eine Belastungsmessung erfolgt, deren Ergebnisse dann zur Einstellung der peripheren Drosselungseinrichtung verwendet und hierzu vom zentralen Informationsverarbeitungs-Schaltwerk zu den verschiedenen peripheren Steuereinrichtungen übertragen werden.

In dem bekannten Falle geht es also um eine Regulierung der Verkehrsbelastung, die an einer zentralen Stelle auftritt, durch Drosselungsmaßnahmen, die in ein und derselben Anlage an einer etwas vorgeordneten Stelle, nämlich in peripheren Einheiten, von denen ja die betreffenden Informationsverarbeitungsaufträge an die zentrale Stelle weitergeleitet werden und hier zusammenfließen, durchgeführt werden. Demgegenüber ist es aber auch wichtig, Verkehrsüberlastungen nicht nur präzise und hierzu frühzeitig innerhalb einer Vermittlungsanlage zu erfassen und zu regulieren, sondern auch bereits in hinsichtlich des Verlaufes der Verkehrsströme vorgeordneten Vermittlungsanlagen.

In dem erläuterten Zusammenhang ist durch die deutsche Offenlegungsschrift 3 435549 (VPA 84 P 1802) eine Schaltungsanordnung für Fernmeldevermittlungsanlagen bekannt, gemäß der in einer Situation der Verkehrsüberbelastung einer zentralen Informationsverarbeitungs- und Steuerungseinrichtung (zentraler Prozessor einer Fernsprechvermittlungsanlage) dafür gesorgt wird, daß innerhalb von ankommend belegbaren Bündeln von Verbindungsleitungen bzw. entsprechenden Verbindungskanälen jeweils ein Teil von diesen von vornherein gegen ankommende Belegungen gesperrt wird, und zwar nach Maßgabe des jeweils herrschenden Verkehrsüberbelastungsgrades, wodurch dieser Situation der Verkehrsüberbelastung entgegengewirkt wird. Dadurch wird bewirkt, daß Verbindungsherstellungsversuche, die von vornherein keine oder eine nur zu geringe Chance auf den Erfolg einer vollständigen Verbindungsdurchschaltung haben, schon zu einem möglichst frühen Zeitpunkt gestoppt werden, daß also von vornherein nutzlose Vermittlungsarbeit unterbleibt. Die betreffenden Informationsverarbeitungs- und Steuereinrichtungen an zentraler Stelle sind dann weitgehend von Verarbeitungs- und Steuerungsvorgängen entlastet, die letztendlich keinen praktischen Nutzen, insbesondere keinen wirtschaftlichen Nutzen, bringen.

Die weitere deutsche Offenlegungsschrift 3 435 497 (VPA 84 P 1782) beschreibt eine Schaltungsanordnung für Fernmeldevermittlungsanlagen, gemäß der Daten über eine eingeschränkte Verkehrsbelastbarkeit einer zentralen Informationsverarbeitungs- und Steuerungseinrichtung zu den betreffenden umliegenden Fernsprechvermittlungsanlagen übertragen werden, wodurch in diesen Einrichtungen zur Bündelauswahl, insbesondere Einrichtungen zur Leitweglenkung so beeinflußt werden, daß Verbindungsherstellungsversuche über solche Fernsprechvermittlungsanlagen hinsichtlich ihres quantitativen Umfanges gedrosselt werden, wodurch in den betreffenden Fernsprechvermittlungsanlagen eine Verkehrsüberbelastung abgebaut bzw. die Situation der Verkehrsüberbelastung von vornherein vermieden wird.

Im weiteren Zusammenhang ist die Frage wesentlich, an welcher Stelle in einem Fernmeldevermittlungsnetz der eingangs angegebenen Art Verkehrsüberbelastungen auftreten können. Hierfür gibt es grundsätzlich zwei Möglichkeiten. Die eine Möglichkeit betrifft einen Mangel an Leistungsfähigkeit hinsichtlich der Informationsverarbeitungs- und Steuerungsaufgaben jeweils innerhalb einer Fernsprechvermittlungsstelle. In diesem Falle stellt also eine Vermittlungsstelle als Ganzes einen Engpaß dar, durch welchen aufgrund von Verkehrsüberbelastungen Verbindungsherstellungsversuche nicht zum Erfolg führen. Die andere Möglichkeit besteht darin, daß ein Verbindungsleitungsbündel bzw. ein Bündel von entsprechenden Verbindungskanälen hinsichtlich des praktisch auftretenden Bedarfes nicht genügend Verbindungsleitungen bzw. Kanäle aufweist. In diesem Fall gehen also Verbindungsherstellungsversuche zu Verlust, weil die dafür benötigten verbindungsindividuell belegbaren Leitungen bzw. Kanäle an den betreffenden Stellen nicht in ausreichender Zahl zur Verfügung stehen.

Die Erfindung befaßt sich nun speziell mit dem Problem, daß Verkehrsüberbelastungssituationen, aufgrund deren ein Teil der Verbindungsherstellungsversuche im gesamten Vermittlungsnetz nicht zum gewünschten Erfolg führen können, bereits so früh wie möglich gestoppt werden sollen. Soweit nun solche Verkehrsüberbelastungssituationen in einzelnen Vermittlungsstellen insgesamt - wie weiter oben erwähnt - auftreten, kann durch eine teilweise Sperrung von Bündeln gemäß der deutschen Offenlegungsschrift 3 435 549 oder durch eine Rückmeldung von Daten bezüglich Verkehrsüberbelastungssituationen in die umliegenden Vermittlungsstellen erreicht werden, daß Verbindungsherstellungsversuche, die aufgrund einer Verkehrsüberbelastungssituation in einer Vermittlungsstelle von vornherein nicht zum gewünschten Erfolg führen können, erst gar nicht bis zu der betreffenden Vermittlungsstelle hin durchgeschaltet werden und deren Informationsverarbeitungs- und Steuerungseinrichtungen in Anspruch nehmen.

Die durch die letzten beiden zuvor genannten Offenlegungsschriften bekannten Maßnahmen zur frühzeitigen Überlastabwehr bzw. zur frühzeitigen Verkehrsumleitung auf andere Verbindungswege gehen davon aus, daß ein Engpaß darin besteht, daß die Verarbeitungskapazität der jeweiligen zentralen Informationsverarbeitungs- und Steuerungseinrichtungen in einer Vermittlungsstelle nicht ausreichend ist für den jeweils momentanen Bedarf. In einer solchen Betriebssituation werden diejenigen Bündel, die zu der betreffenden Vermittlungsstelle hinführen und in dieser Richtung verbindungsindividuell belegbar sind, teilweise unbelegbar gemacht. Wird diese Methode der Abwehr von Verkehrsüberbelastungssituationen verbreitet angewendet, so ist dies gleichbedeutend mit einer entsprechenden fiktiven quantitativen Schwächung des gesamten Vermittlungsnetzes.

Aufgrund der zuvor erläuterten Zusammenhänge besteht deshalb für die Erfindung die Aufgabe, eine möglichst frühzeitige Abwehr von Verkehrsüberbelastungssituationen auf andere als die zuletzt erwähnte bekannte Art und Weise zu ermöglichen, und zwar ohne daß hierfür Bündel teilweise unbelegbar gemacht werden müssen. Ferner soll durch die Erfindung erreicht werden, daß Verkehrsbelastungen an Stellen erfaßbar und durch entsprechende Drosselungsmaßnahmen regulierbar werden, an denen entsprechende Meßeinrichtungen und Drosselungseinrichtungen nicht vorhanden sind, wobei die betreffenden Schaltereignisse sich nur anhand ihres jeweiligen, gegebenenfalls erst späteren Resultates werten lassen.

Gelöst wird diese Aufgabe ausgehend von den Merkmalen des Oberbegriffs des Patentanspruchs 1 erfindungsgemäß durch die Merkmale des kennzeichnenden Teils des Patentanspruchs 1.

Durch die Erfindung wird erreicht, daß alleine anhand des eventuell sogar erst späteren Resultates von Schaltereignissen, das jeweils an anderen, gegebenenfalls fernen Stellen erzielt wird, auf relativ einfache Weise eine vorsorgliche Drosselung erzielt wird. Die Drosselungsintensität orientiert sich dabei einerseits an der Häufigkeit von Schaltereignissen mit jeweils negativem Resultat bei Erniedrigung der Durchlaßquote und andererseits an der Stärke des Zustroms von Schaltereignissen bei einer Erhöhung der Durchlaßquote. Die Regelung der Drosselungsmaßnahmen orientiert sich also an der Verlustwahrscheinlichkeit; dabei weist sie eine erhebliche Elastizität auf.

Da das Zählvolumen inkonstant ist und - ausgehend von einem Ausgangswert - bei einem Ausbleiben von Schaltereignissen mit negativem Resultat von Höhereinstellung zu Höhereinstellung der Durchlaßquote sukzessive herabgesetzt wird, wird erreicht, daß bei einem Ausbleiben von Schaltereignissen mit negativem Resultat die schrittweise sukzessive Höhereinstellung der Durchlaßquote beschleunigt wird, wodurch Drosselungsmaßnahmen, die zwischenzeitlich aufgrund der veränderten Verkehrssituation überflüssig geworden sind, beschleunigt abgebaut werden.

Bei einem erneuten Auftreten von Schaltereignissen mit negativem Resultat wird das Zeitvolumen wieder erhöht. Hierdurch wird erreicht, daß für den Fall, daß während eines beschleunigten Abbaues der Drosselungswirkung erneut ein Schaltereignis mit negativem Resultat auftritt, der beschleunigte Abbau der Drosselungswirkung wieder verlangsamt wird.

Vorteilhafte Weiterbildungen der Erfindung sind in den Unteransprüchen angegeben. Bei dem Verfahren nach Anspruch 2 wird in Abhängigkeit von jeweils einer bestimmten Anzahl von sukzessive nacheinander eingetretenen Schaltereignissen, insbesondere von von einer Drosselungsmaßnahme nicht betroffenen Schaltereignissen, je einmal die für die Einstellung der Drosselungseinrichtung auf eine jeweils niedrigere Durchlaßquote vorgesehene Wertung eines Schaltereignisses mit negativem Resultat unterdrückt. Hierdurch wird erreicht, daß Verkehrsüberbelastungen von relativ nur geringem Ausmaß den Drosselungsmechanismus nicht in Gang setzen. Dadurch wird vermieden, daß Verbindungen, die mit guter Wahrscheinlichkeit noch zustande kommen könnten, verhindert werden.

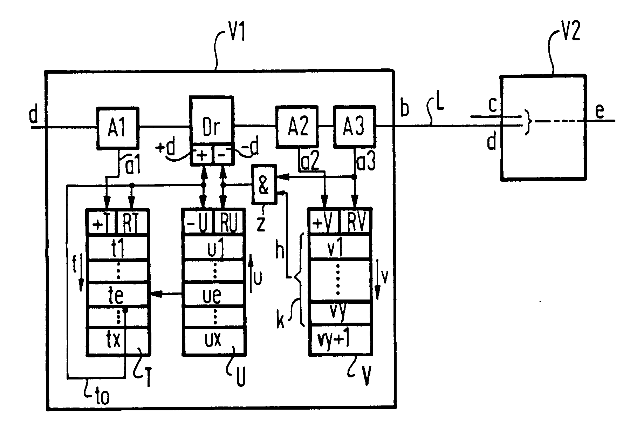

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Es ist eine Fernsprechvermittlungsstelle V1 angedeutet, sowie eine über ein Bündel L von Fernverbindungsleitungen bzw. entsprechenden Kanälen erreichbare ferne Vermittlungsstelle V2. Fernsprechvermittlungsanlagen können hier als allgemein bekannt vorausgesetzt werden. Bei der Fernsprechvermittlungsstelle V1 wird ein Verbindungsweg von a nach b in betracht bezogen. Dieser Verbindungsweg möge eine größere Anzahl von verbindungsindividuell belegbaren Wegen umfassen, die amtsinterne Verbindungsleitungen, sowie Bestandteile von Wählern, Koppelfeldern und dergl. sein mögen.

Ebenfalls bei der fernen Fernsprechfernvermittlungsstelle V2 möge es sich um eine Vermittlungsstelle bekannter Art handeln. In ihr können Verbindungen von Eingängen bei c und bei d zu Ausgängen bei e hergestellt werden. Die Fernsprechvermittlungsstelle V2 ist also über Verbindungsleitungen des Bündels L von der Vermittlungsstelle V1 aus erreichbar.

Es sei im weiteren davon ausgegangen, daß in der fernen Fernsprechfernvermittlungsstelle ein Engpaß besteht, der dazu führt, daß Verbindungsherstellungsaufträge hier aus an sich bekannten Gründen scheitern. Ein solches Scheitern kann verschiedene Ursachen von Verkehrsüberbelastungen haben. Verkehrsüberbelastungen führen bekanntlich zur Abweisung von Verbindungsherstellungsaufträgen; die betreffenden rufenden Teilnehmer erhalten während der Verbindungsherstellung aufgrund eines Gassenbesetztfalles Besetztsignal in Form eines Hörtonsignales. Der Gassenbesetztfall unterscheidet sich bekanntlich grundsätzlich vom Teilnehmerbesetztfall. Bei letzterem wird eine gewählte Verbindung bis zur Teilnehmeranschlußschaltung des jeweils angewählten Teilnehmers durchgeschaltet, wobei jedoch schließlich festgestellt wird, daß nach vollständiger Verbindungsherstellung der angewählte Teilnehmer nicht frei ist. Im Unterschied hierzu liegt ein Gassenbesetztfall vor, wenn eine Verbindung überhaupt nicht ihr Ziel, d.h. die Teilnehmeranschlußschaltung des jeweils angewählten Teilnehmers, erreicht. Hierfür gibt es zwei am meisten vorkommende Ursachen. Die eine Ursache besteht darin, daß an irgendeiner Stelle im Zuge des laufenden Verbindungsaufbaues eine benötigte Leitung bzw. ein benötigter Kanal nicht mehr frei ist. In Anlagen mit Leitweglenkung und entsprechender Wegevielfalt pro Verkehrsbeziehung bedeutet das, daß auf keinem der mehreren an sich beschreitbaren Wege eine Verbindungsdurchschaltung möglich ist. In einem solchen Fall mangelt es an verfügbaren, also verbindungsindividuell belegbaren Verbindungswegen, d.h. Leitungen oder Kanälen. Es handelt sich also um einen Engpaß bzw. um Engpässe im Netz der Verbindungswege. Außerdem kann auch der Fall auftreten, daß Koppelfelder zu schwach bemessen sind, und daß Verbindungen aus diesem Grunde letztlich nicht zustandekommen (Besetztfälle aufgrund innerer Blockierung im Koppelfeld).

Eine andere Möglichkeit besteht darin, daß eine im Aufbau befindliche Verbindung deshalb nicht durchgeschaltet werden kann, weil an einer bestimmten Stelle im Netz die betreffende Vermittlungsstelle nicht mehr genügend Verarbeitungskapazität hat, um die im Zuge dieser Verbindungsherstellung erforderliche Informationsverarbeitung, d.h. in der Hauptsache Verarbeitung der jeweiligen Wahlinformationen und Erarbeitung der entsprechenden Steuerinformationen, insbesondere zur Durchschaltung eines Verbindungsweges über ein zentrales Koppelfeld, durchzuführen. Gassenbesetztfälle infolge Mangels an Informationsverarbeitungskapazität kommen in der Hauptsache in zentralgesteuerten Fernsprechvermittlungsanlagen vor. Genau genommen handelt es sich in diesen Fällen nicht um echte Gassenbesetztsituationen, sondern um etwas diesen nur Ähnliches, nämlich um einen Engpaß hinsichtlich der Leistungsfähigkeit entsprehender zentraler Verarbeitungs- und Steuer-Einrichtungen. Jedoch werden auch hierdurch bedingte Fälle von Abweisungen von Verbindungsherstellungsaufträgen unter die Gassenbesetztfälle subsummiert.-Ganz allgemein betrachtet gibt es also außer den weiter oben erwähnten Teilnehmerbesetztfällen auch Betriebssituationen (Engpässe im Netz, innere Blockierung im Koppelfeld, Überlastung der zentralen Verarbeitungs- und Steuereinrichtungen), die man im Unterschied zum Begriff "Teilnehmerbesetzt" zusammenfassend mit "Unterwegsbesetzt" bezeichnen könnte. Hierfür gilt allgemein der Begriff "Gassenbesetzt".

Eine Verkehrsüberbelastung eines unmittelbar abgehend belegbaren Bündels könnte in der betreffenden Vermittlungsstelle ja noch relativ leicht in bekannter Weise berücksichtigt werden, indem bei an sich bekannten Schaltvorgängen der Leitweglenkung das betreffende oder die betreffenden Bündel, die Verkehrsüberlastungserscheinungen zeigen, bei der Bündelauswahl unberücksichtigt bleiben oder weiter oder ganz hinten eingereiht werden. Zeigt jedoch ein unmittelbar abgehend belegbares Bündel keine Verkehrsüberlastungserscheinungen, so wirkt es sich umso mehr als störend aus, wenn dennoch nach Belegung einer freien Leitung bzw. eines freien Kanals die betreffende im Aufbau befindliche Verbindung nicht weiter aufgebaut werden kann. Das kann im Falle des hier beschriebenen Einzelbeispieles darauf zurückzuführen sein, daß - wie bereits angegeben - die betreffenden zentralen Einrichtungen in der über das jeweilige Bündel erreichten Vermittlungsstelle eine den momentanen Erfordernissen nicht gerecht werdende Verarbeitungskapazität haben, was z.B. durch Spitzenbelastungen in der Hauptverkehrsstunde verursacht sein kann, oder daß der fernen Fernsprechfernvermittlungsstelle V2 über den Zugang c von anderer Seite her Verbindungsherstellungsaufträge zuflieẞen, die die verbindungsindividuell belegbaren Durchschaltewege innerhalb dieser Vermittlungsstelle bereits in hohem Maße in Anspruch nehmen.

Es ist also davon auszugehen, daß die Leitungen des Bündels L keine Verkehrsüberbelastungen aufweisen, daß jedoch Verbindungsherstellungsaufträge innerhalb der Fernsprechfernvermittlungsstelle V2 in der angegebenen Weise scheitern. Dies kann auf einer Überbelastung der informationsverarbeitenden Schalteinrichtungen in dieser Vermittlungsstelle beruhen, ebenso gut aber auch auf einer Überbelastung der in dieser Vermittlungsstelle vorgesehenen Durchschaltewege oder aber auch auf einer Überbelastung der von dieser Vermittlungsstelle aus belegbaren Leitungen bzw. Kanäle. Alle Fälle eines solchen Scheiterns werden - wie bereits ausgeführt wurde - vereinfachend als "Gassenbesetztfälle" bezeichnet. Diese unterscheiden sich von den ebenfalls bereits erwähnten Teilnehmerbesetztfällen in der oben angegebenen Weise.

Die Ermittlung der Verkehrsbelastung zur Erfassung von Verkehrsüberlastung erfolgt mittels einer Zählung von Gassenbesetzt-Fällen. Hierunter sind sowohl - wie bereits erläutert - die Fälle von Verbindungsherstellungsaufträgen zu verstehen, bei denen eine Verbindungsdurchschaltung deshalb nicht möglich ist, weil in den betreffenden, hierfür in Anspruch zu nehmenden Koppelfeldern oder Bündeln von Leitungen bzw. Kanälen keine Verbindungswege mehr frei sind, als auch diejenigen Fälle von Verbindungsaufträgen, in denen eine Verbindungsdurchschaltung deshalb nicht möglich ist, weil in einer Vermittlungsstelle, über die die betreffende Verbindung durchgeschaltet werden soll, die Informationsverarbeitungs- und Steuerungskapazität der betreffenden informationsverarbeitenden und steuernden Zentraleinrichtungen in der jeweiligen Betriebssituation, also momentan oder vorübergehend, nicht ausreicht.

Es werden also alle diejenigen Verbindungsaufträge durch Zählung erfaßt, bei denen eine Verbindung aus einem der drei weiter oben genannten Gründe unterwegs "steckenbleibt". Alle diese Fälle von Verbindungsherstellungsaufträgen sind also vereinfachend zusammen unter dem Begriff "Gassenbesetzt-Fälle" zusammengefaßt. Sie unterscheiden sich von den sogenannten Teilnehmerbesetzt-Fällen, bei denen die gewählte Verbindung jeweils bis zur Teilnehmeranschlußschaltung der angewählten Teilnehmerstelle hergestellt werden kann, letztlich jedoch nur deshalb nicht zustande kommt, weil die jeweils angewählte Teilnehmerstelle besetzt ist.

Die genannte Zählung zur Erfassung von Verkehrsüberlastungen bei der Ermittlung der Verkehrsbelastung erfaßt also nur alle diejenigen Verbindungsherstellungsvorgänge, bei denen ein über die im Aufbau befindliche weitere Verbindung rückwärts übertragenes Wahlendekennzeichen und/oder ein Meldekennzeichen nicht eintrifft.

Die Erfassung aller Gassenbesetztfälle, die nach jeweils einer Belegung einer Leitung des Bündels L aufgrund einer der erläuterten Ursachen auftreten, die in der Fernsprechvermittlungsstelle V2 liegen, erfolgt mit einer Erfassungseinrichtung A3. Diese gibt bei jedesmaligem Auftreten eines Gassenbesetztfalles ein Signal über ihren Ausgang a3 ab.

Sämtliche Verbindungsherstellungsaufträge, die in der Vermittlungsstelle V1 über ihren Zugang a eintreffen, werden mit Hilfe einer Erfassungseinrichtung A1 registriert. Bei jedem registrierten Verbindungsherstellungsauftrag gibt die Erfassungseinrichtung A1 ein Signal über ihren Ausgang a1 ab.

Es ist auch noch eine Drosselungseinrichtung Dr vorgesehen. Diese ist auf eine bestimmte Durchlaßquote einstellbar, die bei 100% oder darunter liegen kann. Die momentan wirksame Durchlaßquote ist bei dieser Drosselungseinrichtung schrittweise einstellbar. Analog hierzu ist die Einstellung eines Abweisungsprozentsatzes, der in ähnlicher Weise schrittweise einstellbar sein kann. Eine solche Drosselungseinrichtung ist bereits in der deutschen Offenlegungsschrift 3 416 592 (VPA 84 P 1351 DE) beschrieben. Es ist möglich, eine Drosselungseinrichtung der dort beschriebenen bekannten Art im vorliegenden Falle einzusetzen.

Die Drosselungseinrichtung Dr hat die Aufgabe, von den durch die Erfassungseinrichtung A1 erfaßten Verbindungsherstellungsaufträgen einen von der jeweils eingestellten Durchlaßquote ausgeschlossenen Anteil als einer entsprechenden Drosselungsmaßnahme zu unterwerfend zu markieren.

Ist die Drosselungseinrichtung Dr zum Beispiel also auf eine Durchlaßquote von 90% eingestellt, so bedeutet dies, daß neun von zehn Verbindungsherstellungsaufträgen unbeeinflußt durchgehen, wohingegen jeder zehnte Verbindungsherstellungsauftrag einer entsprechenden Drosselungsmaßnahme unterworfen wird. Dies kann darin bestehen, daß der betreffende Verbindungsherstellungsauftrag verworfen wird. Dies bedeutet, daß der betreffende rufende Teilnehmer Besetztzeichen erhält, und daß eine Fortführung der begonnenen betreffenden Verbindungsherstellung unterbunden ist. Eine Drosselungsmaßnahme kann demgegenüber auch darin bestehen, daß bei an sich bekannten und hier als bekannt vorausgesetzten Maßnahmen der Leitweglenkung bestimmte Wegemöglichkeiten von der Auswahl unter mehreren Wegemöglichkeiten ausgeschlossen werden. Eine Drosselungsmaßnahme kann auch darin bestehen, daß die betreffende im Aufbau befindliche Verbindung auf andere Wege umgeleitet wird.

Die Drosselungseinrichtung Dr enthält unter anderem eine Steuerungsschaltung, die aus Steuergliedern +d und -d besteht. Jedesmal, wenn ein Signal zu dem Steuerungsglied +d hin abgegeben wird, wird in der Drosselungseinrichtung Dr die Durchlaßquote jeweils um einen Schritt erhöht. Jedesmal, wenn ein Signal zu dem Steuerungsglied -d hin abgegeben wird, wird die Durchlaßquote der Drosselungseinrichtung Dr um einen Schritt erniedrigt. Entsprechendes gilt umgekehrt, wenn als Drosselungseinrichtung eine der durch die zuletzt genannte Offenlegungsschrift bekannten Art verwendet wird, bei der anstelle einer Durchlaßquote ein Abweisungsprozentsatz oder Drosselungsprozentsatz einstellbar ist. Grundsätzlich ist die Summe von Durchlaßquote und Drosselungsprozentsatz immer gleich 100%.

Wie bereits ausgeführt wurde, werden mit Hilfe der Erfassungseinrichtung A1 sämtliche eintreffenden Verbindungsherstellungsaufträge erfaßt. Hierbei handelt es sich also um die Schaltereignisse im Sinne der Erfindung, die Verkehrsbelastungen verursachen. Die Erfindung ist nicht darauf beschränkt, daß es sich bei diesen Schaltereignissen um Verbindungsherstellungsaufträge handelt, sondern als Schaltereignisse können auch solche anderer Art erfaßt werden, die Verkehrsbelastungen verursachen, zum Beispiel Datenverarbeitungsaufträge.

Die Erfassungseinrichtungen A1, A2 und A3 sowie Zähler T, U und V sowie ein UND-Glied z bilden zusammen eine Meßeinrichtung zur Erfassung von Verkehrsbelastungen verursachenden Schaltereignissen und zur Erkennung von diesbezüglichen Verkehrsüberbelastungen im Sinne der Erfindung. Die Drosselungseinrichtung Dr im Sinne der Erfindung dient einer bedarfsweisen Herabsetzung der Verkehrsbelastung in der bereits angedeuteten Weise.

Wie bereits ausgeführt wurde, werden alle Verbindungsherstellungsaufträge durch die Erfassungseinrichtung A1 erfaßt. Bei jedesmaligem Auftreten eines Verbindungsherstellungsauftrages wird ein Signal über den Eingang a1 zum Zähler T hin abgegeben.

Wie ebenfalls bereits ausgeführt wurde, ist die Drosselungseinrichtung Dr auf eine Durchlaßquote durch eine schrittweise Verringerung oder Erhöhung derselben einstellbar. Diese Einstellung auf eine Durchlaßquote kann dadurch bewerkstelligt werden, daß durch entsprechende Informationen ein Abweisungsprozentsatz eingestellt wird. Von den Verbindungsherstellungsaufträgen wird ein von der jeweiligen Durchlaßquote ausgeschlossener Anteil in der bereits angegebenen Weise markiert. Wird die Einstellung der Durchlaßquote durch Einstellung eines umgekehrt entsprechenden Abweisungsprozentsatzes bewerkstelligt, so werden von der Drosselungsmaßnahme alle diejenigen Verbindungsherstellungsaufträge betroffen, die unter den Abweisungsprozentsatz fallen.

Die in der Drosselungseinrichtung Dr von Drosselungsmaßnahmen betroffenen Verbindungsherstellungsaufträge werden - wie bereits ausgeführt wurde - blockiert, oder sie werden auf anderem Wege weitergeführt, zum Beispiel mittels der bereits erwähnten Maßnahmen der Umleitung. Nur diejenigen Verbindungsherstellungsaufträge, die von einer Drosselungsmaßnahme nicht betroffen werden, werden über die Drosselungseinrichtung Dr weitergeleitet zur Erfassungseinrichtung A2. Hier werden also alle diejenigen Verbindungsherstellungsaufträge erfaßt, die von einer Drosselungsmaßnahme nicht betroffen werden. Bei jedesmaligem Auftreten eines Verbindungsherstellungsauftrages, der durch die Erfassungseinrichtung A2 registriert wird, gibt diese ein Signal über ihren Ausgang a2 ab.

Wie bereits ausgeführt wurde, gibt die Erfassungseinrichtung A3 jedesmal ein Signal ab, wenn ein bereits über eine der Leitungen des Bündels L weiter geführter Verbindungsherstellungsauftrag zu einem Gassenbesetztfall führt. Ein Solcher kann in der Fernsprechfernvermittlungsstelle V2 auftreten oder auch noch dahinter.

Es wurden bereits die Zähler T, U und V erwähnt. Jeder dieser Zähler weist unter anderem eine Steuerschaltung auf, die aus den Steuergliedern +T und RT, -U und RU sowie +V und RV jeweils besteht. Jeder dieser Zähler umfaßt eine Anzahl von Zählgliedern. Die Zähler T und U weisen eine Anzahl von x Zählgliedern auf, während der Zähler V eine Anzahl von (vy + 1) Zählgliedern umfaßt.

Bei dem Zähler T handelt es sich um einen zyklisch arbeitenden ersten Zähler. Jedes Mal, wenn der Zähler über sein Steuerglied +T ein Signal erhält, wird der Zähler anfangend von seinem ersten Zählglied t1 jeweils um einen Schritt weitergeschaltet. Die Zählerstellung ist also in an sich bekannter Weise dadurch festgelegt, daß ein entsprechendes Zählerglied markiert ist. Diese Markierung wird bei jedesmaligem Eintreffen eines Signals über den Ausgang a1 bei dem Steuerglied +T um ein Zählglied weiter nach unten weitergeschoben. Die Zählrichtung ist für den Zähler T durch den links von ihm dargestellten Pfeil t angegeben. Hat ein Zählvorgang das unterste Zählglied tx erreicht, so bewirkt ein jeweils nächstfolgender Zählschritt gleicher Art, daß ein Signal unter anderem zum Steuerglied RT übertragen wird, wodurch der Zähler T in seine Ausgangsstellung zurückgesetzt wird. Dadurch wird die zyklische Zählweise bewerkstelligt, indem durch diesen letzten Zählschritt die Markierung von dem Zählglied tx auf das Zählglied t1 überwechselt.

In ähnlicher Weise arbeitet der Zähler U. Jedoch weist dieser eine gegenüber dem Zähler T umgekehrte Zählrichtung auf. Diese ist rechts vom Zähler U mit dem Pfeil u angegeben. Ferner unterscheidet sich die Arbeitsweise des Zählers U auch von derjenigen des Zählers T dadurch, daß der Zähler U azyklisch arbeitet. Seine Ausgangsstellung besteht darin, daß das Zählglied ux markiert ist. Jedesmal, wenn der Zähler U über sein Steuerglied -U ein Signal erhält (vom Zähler T) wird er um einen Schritt in Richtung vom Zählglied ux zum Zählglied u1 weitergeschaltet. Hat die Markierung des Zählers U das Zählglied u1 erreicht, und treffen weitere Signale über das Steuerglied -U ein, so bleibt die Markierung beim Zählglied u1 stehen. Erst wenn der Zähler U über sein Steuerglied RU ein Signal von der UND-Schaltung z erhält, wird er wieder in seine Ausgangsposition zurückgeschaltet, das heißt, die Markierung wechselt vom Zählglied u1 zum Zählglied ux.

Anschließend wird das Zusammenspiel der Zähler t und u beschrieben. Durch das jeweils markierte Zählglied beim Zähler U, zum Beispiel durch das Zählglied ue wird das jeweilige fiktive Ende des Zählers T markiert. Befindet sich also die Markierung des Zählers U bei seinem Zählglied ue, so ist dadurch beim Zähler T das Zählglied te markiert. Dadurch wird bewerkstelligt, daß dann, wenn der Zählvorgang beim Zähler T das markierte Zählglied, also im vorliegenden Beispiel das Zählglied te erreicht hat, der jeweils nächstfolgende Zählschritt den Zählzyklus dieses Zählers T beendet. Hat also die Zählung beim Zähler T das Zählglied te durch dessen Markierung erreicht, und trifft ein weiteres Signal über den Ausgang a1 beim Steuerglied +T ein, so gelangt ein Signal von dem in dieser Betriebssituation markierten Zählglied te unter anderem zum Steuerglied RT, wodurch in der beschriebenen Weise der Zählzyklus geschlossen ist, der Zähler T wieder in seine Ausgangsposition zurückkehrt und dadurch die Markierung vom Zählglied te auf das Zählglied t1 überwechselt.

Je nachdem also, welche Zählstellung der Zähler U erreicht hat, wird durch das dadurch markierte Zählglied, zum Beispiel ue, im Zähler U zugleich auch das entsprechende Zählglied im Zähler T, zum Beispiel also das Zählglied te bezeichnet, wodurch das fiktive untere Ende des Zählers T festgelegt ist, von dem aus der Zählzyklus sich zum Zählglied t hin schließt. Durch die Markierung vom Zähler U her wird also beim Zähler T dessen Zählvolumen bestimmt, und zwar im Sinne einer Herabsetzung des Zählvolumens.

Anschließend wird die Arbeitsweise des Zählers V beschrieben. Auch bei diesem Zähler handelt es sich um einen azyklisch arbeitenden Zähler. Seine Zählrichtung ist rechts von ihm durch den Pfeil v angegeben. Seine Ausgangsposition besteht also darin, daß sein Zählglied v1 markiert ist. Jedesmal, wenn der Zähler V über den Ausgang a2 und sein Steuerglied +V ein Signal erhält, wird er in der bereits für die anderen Zähler beschriebenen Weise um jeweils einen Schritt weitergeschaltet. Der Zähler V arbeitet azyklisch. Dies bedeutet, daß dann, wenn bereits die unterste (in der Figur!) Zählposition erreicht ist - hierbei ist das Zählglied (vy+1) markiert - bei einem Eintreffen weiterer Signale über das Steuerglied +V der Zähler V in seiner Endstellung stehenbleibt, in der das letztgenannte Zählglied markiert ist. Erst wenn der Zähler V ein Signal über sein Steuerglied RV erhält, wird er wieder in seiner Ausgangsposition zurückgestellt, in der - wie bereits angegeben - das Zählglied v1 markiert ist.

Links am Zähler V ist eine Klammer k dargestellt. Diese kann durch ein Mischgatter realisiert sein. Ein solches Mischgatter hat die Aufgabe und die Wirkung, daß es dann, wenn eines der Zählglieder v1 bis vy markiert ist, ein Signal über den Weg h zur Undschaltung z hin abgibt.

Mit Hilfe des Zählers T werden die eintreffenden Verbindungsherstellungsaufträge gezählt. Jedesmal, wenn der Zähler T in der beschriebenen Weise seinen Zählzyklus vollendet, gibt er ein Signal über den Weg to ab. Dieses gelangt außer zum Steuerglied RT dieses Zählers auch zum Steuerglied -U des Zählers U und zum Steuerglied +d der Drosselungseinrichtung Dr. Jedesmal also wenn der Zähler T seinen Zählzyklus vollendet, wird dadurch unter anderem der Zähler U in der durch den Pfeil u angegebenen Zählrichtung um einen Schritt weitergeschaltet. Dadurch wird das Zählvolumen des Zählers T jeweils um einen Zählschritt verkleinert.

Ebenfalls wird jedesmal dann, wenn der Zähler T seinen Zählzyklus vollendet, auch ein Signal zum Steuerglied +d hin abgegeben, wodurch in der angegebenen Weise die Durchlaßquote der Drosselungseinrichtung Dr um einen Schritt erhöht wird.

Befindet sich der Zähler V in seiner letzten Zählstellung, die durch die Markierung des Zählgliedes (vy + 1) gegeben ist, und wird in dieser Betriebssituation ein Gassenbesetzt-Fall mit Hilfe der Erfassungseinrichtung A3 registriert, so gibt diese über ihren Ausgang a3 ein Signal unter anderem zum Steuerglied RV des Zählers V hin ab. Dadurch wird - wie bereits beschrieben wurde - der Zähler V in seine Ausgangsposition zurückgeschaltet, was in einer Markierung des Zählgliedes v1 besteht. Der Zähler arbeitet so, daß diese Zurückschaltung erst endgültig mit Ende dieses Signales erfolgt.

Das zuvor erwähnte Signal, das von der Erfassungseinrichtung A3 über ihren Ausgang a3 abgegeben wird, gelangt auch zur UND-Schaltung z. Diese kann jedoch kein Signal über ihren Ausgang abgeben, weil sie in der zuvor beschriebenen Betriebssituation (Zähler V befindet sich in seiner Endstellung) kein Signal über den Weg h erhält. Ist jedoch der Zähler V in der zuvor beschriebenen Weise in seine Ausgangsposition zurückgeschaltet worden, und trifft ein Gassenbesetztfall ein, bevor der Zähler V wieder seine Endstellung (vy + 1) erreicht hat, so gelangt das erwähnte Signal über den Ausgang a3 zur UND-Schaltung z und zugleich ein Signal über den Weg h ebenfalls zu dieser UND-Schaltung. In diesem Fall gibt die UND-Schaltung ein Ausgangssignal ab, das nun unter anderem zum Steuerglied -d der Drosselungseinrichtung DR gelangt. Dadurch wird die Drosselungseinrichtung Dr dahingehend um einen Schritt weitergeschaltet, daß die Durchlaßquote um einen Schritt herabgesetzt wird.

Das über den Ausgang der UND-Schaltung z abgegebene Signal gelangt außerdem zum Steuerglied RU des Zählers U. Dieser wird dadurch von der jeweils eingenommenen Schaltposition in seine Ausgangsposition zurückgestellt, der die Markierung des Zählgliedes ux entspricht.

Eintreffende Verbindungsherstellungsaufträge werden also mit Hilfe der Drosselungseinrichtung Dr nach Maßgabe der jeweils eingestellten Durchlaßquote in der beschriebenen Weise als einer entsprechenden Drosselungsmaßnahme zu unterwerfend markiert. Die Durchlaßquote wird nach jedesmaligem vollendetem Zählzyklus des Zählers T um einen Schritt erhöht. Dabei können die Zählzyklen des Zähler T auch in der angegebenen Weise verkürzt sein. Der Umfang des Zählzyklusses des Zählers T wird durch den Zähler U diktiert. Dieser gibt also das jeweils momentane Zählvolumen des Zählers T an.

Tritt ein Gassenbesetztfall auf, dessen Signalisierung in der bereits beschriebenen Weise durch die UND-Schaltung z hindurchkommt, so wird damit der Zähler U - wie bereits beschrieben -in seine Ausgangsposition zurückgeschaltet und damit auch das Zählvolumen des Zählers T wieder auf seinen Maximalwert erhöht. Das zuvor beschriebene Zusammenspiel der Zähler T und U hat die Auswirkung, daß bei einem Ausbleiben von Gassenbesetztfällen die Weiterschaltung der Drosselungseinrichtung im Sinne einer wiederholten Erhöhung der Durchlaßquote laufend beschleunigt wird. Diese Weiterschaltung erfolgt also gemäß dem laufend abnehmenden Zählvolumen des Zählers T in immer kürzeren Abständen. Tritt aber erneut ein Gassenbesetztfall ein, der durch die UND-Schaltung z durchgreift, so wird das Zählvolumen des Zählers T wieder erhöht, und zwar auf seinen Maximalwert, wodurch die Vorgänge der Weiterschaltung der Drosselungseinrichtung im Sinne einer Erhöhung der Durchlaßquote wieder in den ursprünglichen zeitlichen Höchstabständen stattfinden.

Mit Hilfe des Zählers V und der UND-Schaltung z wird bewirkt, daß relativ selten und einzeln vorkommende Gassenbesetztfälle nicht gewertet werden. Nur wenn Gassenbesetztfälle auftreten, bevor der Zähler V seine Endstellung erreicht hat, werden diese gewertet. Gassenbesetztfälle werden also nur gewertet wenn sie hinsichtlich der durch die Erfassungseinrichtung A2 erfaßten Verbindungsherstellungsaufträge in kleineren Abständen auftreten, als die durch das Zählvolumen des Zählers V bestimmt ist.

Mit Hilfe der beschriebenen Meßeinrichtung wird also einerseits anhand jedes einzelnen von nacheinander eintretenden Schaltereignissen, zum Beispiel Verbindungsherstellungsaufträgen, mit negativem Resultat, zum Beispiel Gassenbesetztfall die Einstellung der Drosselungseinrichtung Dr schrittweise auf eine jeweils niedrigere Durchlaßquote bewerkstelligt; andererseits wird anhand eines aufsummierten mehrfachen von neutral, also resultatunabhängig erfaßten Verbindungsherstellungsaufträgen die Einstellung der Drosselungseinrichtung Dr ebenfalls schrittweise auf eine jeweils höhere Durchlaßquote bewirkt. In Abhängigkeit von jeweils einer bestimmten Anzahl von sukzessive nacheinander durchlaufenden Verbindungsherstellungsaufträgen wird je einmal die für die Einstellung der Drosselungseinrichtung Dr auf eine jeweils niedrigere Durchlaßquote vorgesehene Wertung eines Verbindungsherstellungsauftrages mit negativem Resultat unterdrückt. Dies geschieht in der beschriebenen Weise mit Hilfe des Zählers V und der UND-Schaltung z, sowie mit Hilfe der Erfassungseinrichtungen A2 und A3. Das genannte Mehrfache von neutral, also resultatunabhängig erfaßten Verbindungsherstellungsaufträgen, das jeweils zur Einstellung der Drosselungseinrichtung Dr schrittweise auf eine jeweils höhere Durchlaßquote bewirkt, ist inkonstant. Hierzu dient die beschriebene Einflußnahme des Zählers U auf den Zähler T. Dadurch wird bei einem Ausbleiben von Verbindungsherstellungsaufträgen mit negativem Resultat dieses Mehrfache von Höhereinstellung zu Höhereinstellung der Durchlaßquote sukzessive herabgesetzt. Es wird also das Zählvolumen des Zählers T sukzessive herabgesetzt. Bei einem erneuten Auftreten von Gassenbesetztfällen, also von Verbindungsherstellungsaufträgen mit negativem Resultat wird dieses Mehrfache wieder erhöht, und zwar in der beschriebenen Weise auf den Ausgangswert, der durch das maximale Zählvolumen des Zählers T bestimmt ist. Es ist jedoch auch möglich, in Abweichung hiervon das Mehrfache in diesen Betriebsfällen jeweils nur um einen Schritt zu erhöhen.

## Patentansprüche

1. Verfahren zur Einstellung einer Durchlaßquote für in einer Fernmeldeanlage, insbesondere Fernsprechvermittlungsanlage eintreffende Schaltereignisse, wobei nach Maßgabe der Durchlaßquote ein prozentualer Anteil der eintreffenden Schaltereignisse zur Weiterbehandlung freigegeben bzw. zur Vermeidung von Überbelastung einer Drosselungsmaßnahme unterworfen wird, **dadurch gekennzeichnet,** daß
   - die eintreffenden Schaltereignisse von einem Zähler (T) mit einstellbarem Zählvolumen zyklisch gezählt werden und pro Zählzyklus
     - einerseits jeweils wenigstens eine, eine Erhöhung der Durchlaßquote um einen jeweiligen Erhöhungswert bewirkende erste Einstellinformation gebildet wird und
     - andererseits bis zum Erreichen eines für das Zählvolumen vorgegebenen Minimalwertes (t1) jeweils wenigstens eine, eine Verringerung des Zählvolumens um einen jeweiligen Zählwert bewirkende Zählersteuerinformation gebildet wird,
   - und daß bei negativen Resultaten von zur Weiterbehandlung freigegebenen Schaltereignissen
     - einerseits jeweils eine zur Verringerung der Durchlaßquote um einen jeweiligen Verringerungswert vorgesehene zweite Einstellinformation und
     - andererseits jeweils wenigstens eine zur Rückstellung des Zählvolumens auf einen vorgegebenen Maximalwert (tx) vorgesehene Rückstellinformation gebildet wird.

2. Verfahren nach Anspruch 1,
   **dadurch gekennzeichnet,**
   daß die zur Weiterbehandlung freigegebenen Schaltereignisse mit Hilfe eines weiteren Zählers (V) bis zum Erreichen seines vorgegebenen Endwertes (vy + 1) gezählt werden, daß der weitere Zähler (V) bei negativen Resultaten von zur Weiterbehandlung freigegebenen Schaltereignissen jeweils auf seinen Anfangswert (v1) zurückgestellt wird und daß die zweite Einstellinformation (a3) eine Verringerung der Durchlaßquote und die Rückstellinformation (a3) eine Rückstellung des Zählvolumens nur dann bewirkt, wenn der weitere Zähler (V) zumindest seinen Endwert (vy + 1) noch nicht eingenommen hat.

3. Verfahren nach Anspruch 1 oder 2,
   **dadurch gekennzeichnet,**
   daß der Zähler mit einstellbarem Zählvolumen mittels einer ersten inkrementierenden und einer zweiten dekrementierenden Zählerkomponente (T,U) gebildet wird,
   daß der Zählerstand der ersten Zählerkomponente (T) bei eintreffenden Schaltereignissen bis zum Erreichen eines, eine Rückstellung der ersten Zählerkomponente (T) bewirkenden Rampenwertes (te) jeweils erhöht wird, daß der Zählerstand der zweiten Zählerkomponente (U) bis zum Erreichen ihres Endwertes (U1) bei jeder Rückstellung der ersten Zählerkomponente (T) verringert wird und daß der Rampenwert (te) der ersten Zählerkomponente (T) jeweils durch den momentanen Zählerstand (ue) der zweiten Zählerkomponente (U) bestimmt wird.

## Claims

1. Method for limiting the traffic flow based on incoming call attempts in a telecommunication system, preferably a telephone exchange, a percentage proportion of the incoming call attempts being released for further processing or being subjected to a limiting measure for avoiding congestion as determined by the traffic flow, characterised in that
   - the incoming call attempts are cyclically counted by a counter (T) with adjustable counting volume and, for each counting cycle,
     - on the one hand, in each case at least one first adjustment information item causing an increase in the traffic flow by a respective increment is formed and,

- on the other hand, in each case at least one counter control information item causing a reduction in the counting volume by a respective count is formed until a minimum value (t1) predetermined for the counting volume is reached,
- and that in the event of negative results of call attempts released for further processing,
  - on the one hand, in each case a second adjustment information item provided for reducing the traffic flow by a respective decrement is formed, and,
  - on the other hand, in each case at least one resetting information item provided for resetting the counting volume to a predetermined maximum value (tx) is formed.

2. Method according to Claim 1, characterised in that the call attempts released for further processing are counted with the aid of a further counter (V) until its predetermined end value (vy + 1) is reached, in that the further counter (V), in the event of negative results of call attempts released for further processing, is in each case reset to its initial value (v1), and in that the second adjustment information item (a3) causes a reduction in the traffic flow and the reset information item (a3) causes a resetting of the counting volume only when the further counter (V) has at least not yet assumed its end value (vy + 1).

3. Method according to Claim 1 or 2, characterised in that the counter with adjustable counting volume is formed by means of a first incrementing and a second decrementing counter component (T,U), in that the count of the first counter component (T) is incremented in each case with incoming call attempts until a ramp value (te) causing a resetting of the first counter component (T) is reached, in that the count of the second counter component (U) is decremented with each resetting of the first counter component (T) until its end value (U1) is reached, and in that the ramp value (te) of the first counter component (T) is in each case determined by the instantaneous count (ue) of the second counter component (U).

**Revendications**

1. Procédé pour régler un taux de transmission d'évènements de commutation qui arrive dans une installation de télécommunication, notamment une installation de commutation téléphonique, selon lequel, en fonction du taux de transmission, un pourcentage des évènements de commutation arrivants sont autorisés en vue de leur traitement ultérieur ou sont soumis à des mesures d'étranglement afin d'éviter une surcharge, caractérisé par le fait que

- les évènements de commutation arrivants sont comptés cycliquement par un compteur (T) possédant une capacité de comptage réglable et que pour chaque cycle de comptage
  - d'une part, respectivement au moins une première information de réglage déclenchant un accroissement, d'une valeur respective d'augmentation, du taux de transmission, est formée, et,
  - d'autre part, jusqu'à ce que soit atteinte une valeur minimale (t1) prédéterminée pour le volume de comptage, respectivement au moins une information de commande du compteur, qui déclenche la réduction de la capacité de comptage d'une valeur de comptage respective, est formée,
- et que, dans le cas de résultats négatifs d'évènements de commutation autorisés pour la poursuite de leur traitement,
  - d'une part, respectivement une seconde information de réglage prévue pour réduire, d'une valeur respective de réduction, le taux de transmission, est formée, et,
  - d'autre part, respectivement au moins une information de rétrogradation, prévue pour réduire la capacité de comptage à une valeur maximale prédéterminée (tx), est formée.

2. Procédé suivant la revendication 1, caractérisé par le fait que les évènements de commutation libérés pour la poursuite de leur traitement sont comptés à l'aide d'un autre compteur (V) jusqu'à ce que sa valeur finale (vy + 1) prédéterminée soit atteinte, que dans le cas de résultats négatifs d'évènements de commutation autorisés pour leur traitement ultérieur, l'autre compteur (V) est rétrogradé respectivement à sa valeur initiale (v1) et que la seconde information de réglage (a3) déclenche une réduction du taux de transmission et que l'information de rétrogradation (a3) déclenche une réduction de la capacité de comptage uniquement lorsque l'autre compteur (V) n'a pas encore atteint au moins sa valeur finale (vy + 1).

3. Procédé suivant la revendication 1 ou 2, caractérisé par le fait
que le compteur possédant une capacité de comptage réglable est constitué d'un premier composant (T) réalisant une incrémentation et d'un second composant (U) réalisant une décrémentation,
que, dans le cas d'événements de commutation arrivants, l'état de comptage du premier composant (T) du compteur est respectivement accru jusqu'à ce que soit atteinte une valeur rampe (te) déclenchant une rétrogradation du premier composant (T) du compteur,
que l'état de comptage du second composant (U) du compteur est réduit jusqu'à ce que sa valeur terminale (U1) soit atteinte, lors de chaque rétrogradation du premier composant (T) du compteur, et que la valeur rampe (te) du premier composant (T) du compteur est déterminée respectivement par l'état instantané de comptage (te) du second composant (U) du compteur.